# EUROPEAN PATENT APPLICATION

(11) **EP 0 898 858 A1**
(43) Date of publication of application: **03.03.1999**
(21) Application number: 98115561.7
(22) Date of filing: 19.08.1998
(51) Int. Cl.: A01B 1/14

(54) **Hand-held gardening or agricultural tool for breaking up and aerating ground portions**

(30) Priority: 28.08.1997 IT VI970053 U
(71) Applicant: Siris Garden S.r.l., 36060 Romano d'Ezzelino VI (IT)
(72) Inventor: Tonietto, Daniele, 36060 Romano d'Ezzelino VI (IT)
(74) Representative: La Ciura, Salvatore

(57) **Abstract**

A hand-held gardening or agricultural tool (1) for aerating and breaking up ground portions is described, said tool being fastened on the lower end of a vertically extending handle (2) having an upper grip (3), said tool comprising a plurality of arms (5) ending with straight operational portions and with pointed ends (7), said arms being radially arranged in the initial engaging portion around and at a certain distance from said handle and bending downwards to form with the initial portion an angle wider than a right angle, i.e. preferably an angle of about 110-120 degrees.

## Description

The present invention provides a hand-held gardening or agricultural tool for breaking up and aerating ground portions used both for ornamental and market-gardening purposes.

In particular, the tool of the invention allows superficially firm ground to be broken up and aerated, so that, due to the surface crust being broken, the ground may be aerated and some fertilizer may be poured into it or seeding may be integrated.

As known, both in the gardening and agricultural fields, or in the small cultivation field, it may often be necessary or convenient to fertilize or integrate with additives or additional seeds ground portions which in time have thinned out due to stamping or wrong exposures to water and light or other similar reasons.

As also known, whenever vegetation on both ornamental and agricultural ground thins out, or anyway with "seasoned" ground, the surface crust is very hard and firm, and, therefore, it lacks oxygen and is impermeable to any additive which might be poured into it.

In all these cases, if someone wishes to pour some integrating products into the ground, the surface crust need be broken so that the material, penetrating to a certain depth, can perform its function.

In this regard several agricultural or gardening tools are known which perform the above described function both mechanically and manually.

For example, several hand-held devices are known which are attached to the end of a handle and comprise a plurality of both stationary and rotary pointed elements which are both repeatedly driven into the ground and progressively moved forward on the ground to break up the ground surface.

Among the drawbacks noticed when using said known hand-held devices, there is the difficulty for the devices to penetrate to a certain depth into the ground and to get out of the processed ground portion to break the sod without holding back too much ground.

Obviously these difficulties make breaking up even limited ground portions very hard and heavy, since the operator is compelled to carry out very tiring tasks,as he has to make up for the tool limitations with strength.

The object of the present invention is to provide a new hand-held tool for breaking up ground portions which overcomes the above mentioned drawbacks by making the operator's task easier, since the operator no longer needs to use complex and expensive mechanical instruments.

As a matter of fact, the present invention provides a new tool comprising extremely simple but functional parts, both to limit the manufacturing and purchasing costs and to improve the quality of breaking up the ground portion to be processed.

According to the present invention, all said objects and advantages are reached by a hand-held gardening or agricultural tool for aerating and breaking up ground portions, which is fastened on the lower end of an elongated handle being vertically provided with an upper grip and is characterised in that it comprises a plurality of particularly shaped arms ending with straight and pointed ends, said arms being radially arranged around said handle in the initial engaging portion and bending downwards at a certan distance from the handle to form with the initial portion an angle wider than a right angle, i.e. an angle of approximately 110-120 degrees.

Said particular arrangement of the pointed arms forming the tool of the invention allows the tool to be easily driven into the ground, so that, during the extraction phase, the ground around the points is moved and raised thus breaking the ground surface crust.

Further features and details of the present invention will become more apparent from the following description of a preferred embodiment, shown by way of non restrictive example in the accompanying drawings, in which:

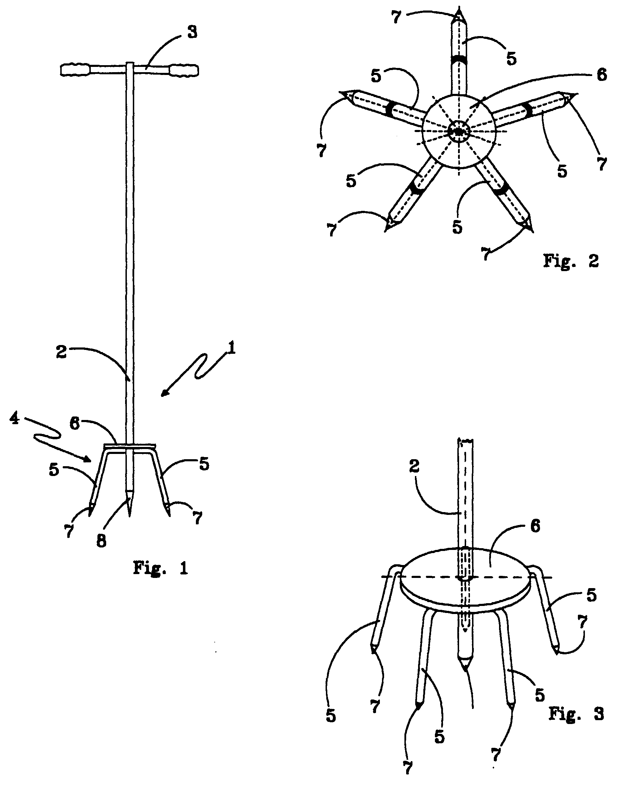

- fig. 1 is a side schematic view of the breaking up tool of the invention attached on the lower end of a bearing handle;
- fig. 2 is a plan view of a detail of the tool of the invention;
- fig. 3 is a detailed perspective view of the tool.

With reference to the accompanying drawings, numeral 1 indicates the assembly of a hand-held gardening or agricultural tool for breaking up ground portions, said tool substantially comprising a vertically extending handle 2 on the upper portion of which a grip 3 is fastened, whereas on the tool lower portion the device 4 of the invention is fastened.

Said device thus comprises a plurality of arms 5 the initial portion of which is radially arranged around the handle lower portion and fastened thereon by interposing a plate 6 to provide a sufficiently rigid device, whereas the end portion, having straight and pointed ends 7, extends downwards thus forming a sort of elbow.

As shown in the figures, each arm 5 bends downwards to form with the initial portion an angle wider than 90°, i. e. of about 110-120°, to provide a flared region the sides of which define a hypotethical truncated pyramid.

All the pointed ends 7 of arms 5 are therefore located on the same horizontal plane also supporting the pointed lower end 8 of the handle 2.

As previously mentioned, the particular arrangement of the pointed arms forming the tool of the invention allows the tool to be easily driven into the ground, so that, during the extraction phase, the ground around the points is moved and raised thus allowing the ground to be aerated and broken up.

As a matter of fact, the bent ends of the arms form with the ground an undercut which causes the sod to break during the tool extraction phase.

The breaking of the ground crust will be advantageously facilitated and completed also by a certain oscillating movement of the tool, effected by moving the grip.

The hand-held tool of the invention, which can be used in the agricultural or gardening field to aerate and break up ground portions, has been described and illustrated according to a preferred embodiment, but some variations can be provided which are technically equivalent to the mentioned parts and components and which, therefore, fall within the scope of the present invention.

## Claims

1. A hand-held gardening or agricultural tool for aerating and breaking up ground portions, said tool being fastened on the lower end of a vertically extending handle having an upper grip, characterized in that it comprises a plurality of arms ending with straight operational portions and with pointed ends, said arms being radially arranged in the initial engaging portion around and at a certain distance from said handle and bending downwards to form with the initial portion an angle wider than a right angle, i.e. preferably an angle of about 110-120 degrees.

2. A hand-held gardening tool according to the preceding claim, characterized in that the initial portion of said arms is radially arranged around the handle lower portion and fastened thereon by interposing a plate or the like to make the tool sufficiently rigid, whereas the end portion, having pointed ends, bends downwards thus forming a sort of elbow.

3. A hand-held gardening tool according to the preceding claim, characterized in that the end portion of said arms, which is angularly arranged relative to the initial portion thereof, has a certain slope so that the tool operational parts define a hypotethical truncated pyramid.

4. A hand-held gardening tool according to any of the preceding claims, characterized in that the operational part of the tools forms with the bearing arms an angle wider than 90°.

5. A hand-held gardening or agricultural tool as described and illustrated.
